(19) Europäisches Patentamt
European Patent Office
Office européen des brevets

(11) **EP 1 397 663 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**04.09.2019 Patentblatt 2019/36**

(45) Hinweis auf die Patenterteilung:
**09.12.2009 Patentblatt 2009/50**

(21) Anmeldenummer: **02747394.1**

(22) Anmeldetag: **17.06.2002**

(51) Int Cl.:
***G01N 11/16*** *(2006.01)*

(86) Internationale Anmeldenummer:
**PCT/EP2002/006633**

(87) Internationale Veröffentlichungsnummer:
**WO 2002/103327 (27.12.2002 Gazette 2002/52)**

(54) **VISKOSITÄTS-MESSGERÄT**

DEVICE FOR MEASURING VISCOSITY

APPAREIL DE MESURE DE LA VISCOSITE

(84) Benannte Vertragsstaaten:
**AT BE CH CY DE DK ES FI FR GB GR IE IT LI LU MC NL PT SE TR**

(30) Priorität: **19.06.2001 EP 01114644**
**21.09.2001 EP 01122843**
**29.10.2001 EP 01125775**

(43) Veröffentlichungstag der Anmeldung:
**17.03.2004 Patentblatt 2004/12**

(73) Patentinhaber:
• **Endress + Hauser Flowtec AG**
**4153 Reinach/BL (CH)**
• **Endress+Hauser (Deutschland) AG+Co. KG**
**79576 Weil am Rhein (DE)**

(72) Erfinder:
• **DRAHM, Wolfgang**
**85435 Erding (DE)**

• **MATT, Christian**
**CH-4147 Aesch (CH)**
• **RIEDER, Alfred**
**84034 Landshut (DE)**

(74) Vertreter: **Andres, Angelika Maria et al**
**Endress+Hauser (Deutschland) AG+Co. KG PatServe**
**Colmarer Strasse 6**
**79576 Weil am Rhein (DE)**

(56) Entgegenhaltungen:
**EP-A- 1 154 254      DE-A- 2 701 184**
**DE-A1- 2 701 184      DE-A1- 2 924 235**
**DE-U1- 29 815 069      US-A- 4 420 753**
**US-A- 4 524 610      US-A- 5 254 846**
**US-A- 5 672 975      US-A- 5 907 292**

• **DIN IEC 381, Teil 1, November 1985**

**EP 1 397 663 B2**

**Beschreibung**

Die Erfindung betrifft ein Viskositäts-Messgerät für ein in einer Rohrleitung strömendes Fluid.

In der Mess- und Automatisierungstechnik werden zur Ermittlung der Viskosität eines in einer Rohrleitung strömenden Fluids, insb. einer Flüssigkeit, oftmals solche Messgeräte verwendet, die mittels eines Messaufnehmers vom Rotationstyp oder einem Messaufnehmers vom Vibrationstyp und einer daran angeschlossenen Messgerät-Elektronik im hindurchströmenden Fluid innere Reibungskräfte bewirken und von diesen abgeleitet ein mit der jeweiligen Viskosität korrespondierendes Viskositätssignal erzeugen. Entsprechende Viskositäts-Messgeräte sowie Verfahren zum Messen der Viskosität mittels solcher Messgeräte sind z.B. in der US-A 45 24 610, der US-A 47 04 898, der US-A 47 54 640, der US-A 49 20 787, der US-A 49 22 745, der US-A 51 57 962, der US-A 52 28 331, der US-A 54 48 921, der WO-A 95/16 897, der EP-A 527 176, der EP-A 1 158 289 sowie auch in den nicht vorveröffentlichten europäischen Patentanmeldungen 01 120343.7 oder 01 121869.0 beschrieben, wobei die dort gezeigten Viskositäts-Messgeräte zum Erzeugen von Scherkräften im Fluid jeweils einen elektro-mechanischen Messaufnehmer mit einem mit der Rohrleitung kommunizierenden Messrohr zum Führen des Fluids umfassen.

Prinzipiell kann bei den genannten "In-line" messenden Viskositäts-Messgeräten zwischen solchen unterschieden werden, die ein in das Fluid eintauchendes schwingendes oder auch rotierendes Erregerelement, z.B. eine Schwinggabel oder einen Rotationszylinder, umfassen, und solchen, bei denen das Fluid führende Meßrohr vibrieren gelassen wird. Letztere sind z.B. in der US-A 45 24 610, der WO-A 95/16 897 oder der EP-A 1 158 289 sowie auch in den nicht vorveröffentlichten europäischen Patentanmeldungen 01 120343.7 oder 01 121869.0 beschrieben, wobei die dort gezeigten Viskositäts-Messgeräte jeweils umfassen:

- einen Messaufnehmer vom Vbrationstyp
- mit einem mit der Rohrleitung kommunizierenden und im Betrieb vibrierenden Messrohr zum Führen des Fluids,
- mit einer Erregeranordnung zum Vibrierenlassen des Messrohrs,
- mit einer Sensoranordnung zum Erfassen von Vibrationen des Messrohrs und zum Erzeugen mindestens eines die Vibrationen des Messrohrs repräsentierenden Sensorsignals sowie
- eine Messgerät-Elektronik, die
- einen die Erregeranordnung speisenden Erregerstrom und
- zumindest einen die Viskosität des Fluids momentan repräsentierenden Viskositäts-Messwert liefert.

Viskositäts-Messgeräte der beschriebenen Art sind netzgespeiste Messgeräte und müssen hierfür mindestens zwei elektrische Zuleitungen, also Leiter haben. Das mit der Viskosität korrespondierende Viskositätssignal, das zur Viskosität insb. proportional sein kann, wird entsprechend einem hierfür üblichen Standard, z.B. entsprechend dem zwischen 4 mA und 20 mA liegenden Strom-Standard, beispielsweise gemäß DIN IEC 381, Teil 1 vom November 1985, und/oder einem üblichen Frequenz-Standard und/oder einem digitalen Standard, erzeugt und abgegeben; hierfür sind bislang mindestens zwei weitere Leiter erforderlich.

Insbesondere bei der Verwendung mehrerer solcher Viskositäts-Messgeräte in einer Anlage und/oder auch bei der Installation von Viskositäts-Messgeräten an einem von der externen Energieversorgung weit entfernten Ort bedeutet die Verwendung von zusätzlichem Leitungsmaterial einen nicht unerheblichen Verdrahtungsaufwand.

Ferner besteht in der Mess- und Automatisierungstechnik der Bedarf an standardisierten oder zumindest weitgehend einheitlichen Schnittstellen zwischen solchen Messgeräten und z.B. übergeordneten Steuer- und Regelungseinheiten. Auch ist man bestrebt, die Vielfalt solcher Schnittstellen möglichst überschaubar zu halten.

Zur Erreichung dieser Ziele besteht die Erfindung daher in einem Viskositäts-Messgerät für ein in einer Rohrleitung strömendes Fluid, welches Viskositäts-Messgerät umfasst:

- einen Messaufnehmer vom Vibrationstyp, insb. vom Biegeschwingungstyp,
- mit mindestens einem mit der Rohrleitung kommunizierenden, im Betrieb vibrierenden Messrohr zum Führen des Fluids und zum Erzeugen von im Fluid wirkenden Reibungskräften,
- mit einer Erregeranordnung zum Vibrierenlassen des mindestens einen Messrohrs sowie
- eine einen vorgebbaren Bedarf an elektrischer Leistung aufweisende Messgerät-Elektronik, die
- einen die Erregeranordnung speisenden Erregerstrom und
- einen eine Viskosität des Fluids momentan repräsentierenden Viskositäts-Messwert liefert,
- wobei die Messgerät-Elektronik mit einer Zwei-Leiter-Prozesskontroll-Schleife verbunden und davon mit elektrischer Energie versorgt ist und
- wobei die Messgerät-Elektronik ein mit dem Viskositäts-Messwert korrespondierendes Viskositätssignal in die Zwei-Leiter-Prozesskontroll-Schleife einspeist oder dieses einstellt, wobei der Bedarf der Messgerät-Elektronik an elektrischer Leistung variierbar ist,

wobei die Messgerät-Elektronik eine Steuerschaltung zum Einstellen des Bedarfs an elektrischer Leistung umfasst, wobei die Messgerät-Elektronik einen an die Zwei-Leiter-Prozesskontroll-Schleife gekoppelten Energiepuffer enthält, der die von der Messgerät-Elektronik benötigte Leistung mindestens teilweise und/oder mindestens zeitweise bereitstellt.

Nach einer zweiten Ausgestaltung umfasst die Messgerät-Elektronik:

- eine Erregerschaltung zum Erzeugen des Erregerstroms und
- eine Auswerteschaltung zum Erfassen des Sensorsignals und zum Ermitteln des Viskositäts-Messwerts, wobei
- die Steuerschaltung die Erregerschaltung und/oder die Auswerteschaltung zum Absenken des Bedarfs an elektrischer Leistung zeitweise deaktiviert.

In Weiterbildung der dritten Ausgestaltung veranlasst die Steuerschaltung ein zeitweises Laden des Energiepuffers.

Nach einer vierten Ausgestaltung der Erfindung ist das Viskositäts-Messgerät mittels der Zweidraht-Prozesskontroll-Schleife an einem Feldbus angeschlossen.

Nach einer fünften Ausgestaltung der Erfindung führt die Zweidraht-Prozesskontroll-Schleife einen Gleichstrom; dabei ist Viskositätssignal bevorzugt ein veränderlicher Gleichstrom, das insb. einen Bereich von 4 mA bis 20 mA umfasst, oder bevorzugt ein Digitalsignal.

Nach einer sechsten Ausgestaltung der Erfindung weist der Messaufnehmer eine Sensoranordnung zum Erfassen von Vibrationen des Messrohrs und zum Erzeugen von mindestens einem diese repräsentierenden Sensorsignal auf.

In Weiterbildung der sechsten Ausgestaltung stellt die Messgerät-Elektronik den Erregerstrom mittels des Sensorsignals ein.

Nach einer siebten bevorzugten Ausgestaltung der Erfindung umfaßt die Erregerschaltung eine Amplitudendemodulationsstufe zum Erzeugen eines Ausgangssignal, das eine Schwingungsamplitude des vibrierenden Meßrohrs momentan repräsentiert, wobei der Amplitudendemodulationsstufe eines der von der Sensoranordnung gelieferten Sensorsignale bzw. deren Summe als Eingangssignal zugeführt ist.

In ersten Weiterbildung der siebten Ausgestaltung der Erfindung umfaßt die Erregerschaltung eine Vergleichsstufe zum Ermitteln einer Abweichung der erfaßten Schwingungsamplitude des vibrierenden Meßrohrs von einer vorgegebenen Soll-Schwingungsamplitude, wobei der Vergleichsstufe eingangseits neben dem Ausgangssignal der Amplitudendemodulationsstufe ein Referenzsignal zugeführt ist, das die Soll-Schwingungsamplitude repräsentiert.

In zweiten Weiterbildung der siebten Ausgestaltung der Erfindung umfaßt die Erregerschaltung eine eingangsseits mit einem Ausgang der Vergleichsstufe gekoppelte Amplitudenmodulationsstufe zum Erzeugen eines Treibersignals für die Erregeranordnung, das eine von der ermittelten Abweichung abhängige Signalamplitude aufweist, wobei der Amplitudenmodulationsstufe eingangsseits neben einem die Abweichung der erfaßten Schwingungsamplitude von der vorgegebenen Soll-Schwingungsamplitude repräsentierenden Fehlersignal das Eingangssignal der Amplitudendemodulationsstufe zugeführt ist

In dritten Weiterbildung der siebten Ausgestaltung der Erfindung umfaßt die Erregerschaltung eine eingangsseits mit einem Ausgang der Vergleichsstufe gekoppelte Pulsweitenmodulationsstufe zum Erzeugen eines getakteten Treibersignals für die Erregeranordnung, das eine von der ermittelten Abweichung abhängige Pulsweite aufweist, wobei der Pulsweitenmodulationsstufe eingangsseits neben einem die Abweichung der erfaßten Schwingungsamplitude von der vorgegebenen Soll-Schwingungsamplitude repräsentierenden Fehlersignal das Eingangssignal der Amplitudendemodulationsstufe zugeführt ist.

Die Erfindung beruht insb. darauf, daß es den Erfindern gelungen ist, ein Viskositäts-Messgerät mit vibrieren gelassenem Meßrohr zu bauen, daß überraschenderweise allein mit der über eine Zwei-Leiter-Prozesskontroll-Schleife der beschriebenen Art minimal übertragenen, also im Normalbetrieb eines solchen Zwei-Leiter-Meßgeräts minimal zu erwartenden elektrischen Energie betrieben werden kann. Überdies ist hierbei auch erkannt worden, daß sich die zu messende Viskosität in den meisten Anwendungsbereichen nur so langsam ändert, daß bereits ein niederfrequentes Aktualisieren des Viskositäts-Messwerts und somit auch ein nur temporärer Betrieb des Messaufnehmers möglich ist. Dadurch kann ferner auch der zeitliche Abstand zwischen den einzelnen Aktualisierungen des Viskositäts-Messwerts, ohne weiteres so groß bemessen werden - oder in anderen Worten kann die Aktualisierungs- oder auch Abtastfrequenz so klein bemessen werden -, daß selbst für den evtuell zu erwartenden Fall, daß die über die Zwei-Leiter-Prozesskontroll-Schleife übertragene Energie zeitweise dem Leistungsbedarf des Vskositäts-Messgeräts nicht zu erfüllen in der Lage wäre, ein Energiepuffer hinreichend schnell aufgeladen und somit die erforderliche elektrische Leistung bzw. Energie in der Messgerät-Elektronik stets verfügbar gehalten werden kann.

Durch die Erfindung wird erstmals ein marktfähiges, für die Messung von in Rohrleitungen strömenden Fluiden geeignetes Zwei-Leiter-Viskositäts-Messgerät geschaffen. Die beiden Leiter der Zwei-Leiter-Prozesskontroll-Schleife dienen sowohl der Energieversorgung, wozu an die zwei Leiter von außen eine Energiequelle, vorzugsweise eine Gleichspannungsquelle, anzulegen ist, als auch der Übertragung des Viskositätssignals, z.B. inform eines mit dem Viskositätsmeßwert modulierten veränderlichen Gleichstroms.

Bevorzugt ist das Viskositäts-Messgerät so ausgebildet, daß der in den beiden Leitern fließende Strom ein mittels eines physikalisch-elektrischen Wandlers erzeugtes Wandlersignal, insb. möglichst proportional, abbildet; im vorliegenden Meßgerät ist der physikalisch-elektrische Wandler das mindestens eine vibrierengelassene Meßrohr im Zusammenwirken mit der Erreger- und ggf. der Sensoranordnung. Bei dem erfindungsgemäßen, nach dem eingangs erwähnten, zwischen 4 mA und 20 mA liegenden Strom-Standard ausgelegten Viskositäts-Messgerät entspricht ein momentaner innerhalb dieses Strombereichs liegender Stromwert des in der Zwei-Leiter-Prozesskontroit-Schteife fließenden Stroms genau einem momentanen Viskositätsmeßwert. Dies bedingt, dass die Energieversorgung bei z.B. 12 V Betriebsspannung nur eine Leistung in der Größenordnung von 48 mW bis 240 mW zur Verfügung stellt, die im Folgenden als Klein-Leistung bezeichnet wird; jedoch ist lediglich der Strombereich unterhalb von 4 mA ist für die Energieversorgung des Viskositäts-Messgeräts permanent nutzbar.

Das erfindungsgemäße Viskositäts-Messgerät kann aufgrund der für seinen Betrieb erforderlichen Kleinleistung die Vorschriften der verschiedenen Explosionsschutz-Klassen ohne weiters einhalten. Dabei ist Meßgerät in besonderer Weise auch für einen Einsatz in solchen explosionsgefährdeten Umgebungen geeignet, in denen lediglich Geräte von intrinsischer Sicherheit erlaubt sind.

Ferner kann das Zwei-Leiter-Viskositäts-Messgerät in einfacher Weise so ausgebildet werden, dass es mit einem der üblichen Feldbusse zusammenarbeiten kann. Dies kann einerseits durch direkten Anschluss an den Feldbus, z.B. entsprechend dem FIELDBUS-Protokoll, erfolgen (FIELDBUS ist eine eingetragene Marke der FIELDBUS FOUNDATION). Andererseits kann das Zusammenarbeiten mittels eines Buskopplers, z.B. entsprechend dem sogenannten HART-Protokoll, indirekt erfolgen (HART ist eine eingetragene Marke der HART User Group).

Weitere Vorteile der Erfindung und sie selbst werden nun anhand der Figuren der Zeichnung näher erläutert, in der bevorzugte Ausführungsbeispiele dargestellt sind. Funktionsgleiche Teile sind in den einzelnen Figuren mit denselben Bezugszeichen versehen, jedoch sind diese Bezugszeichen in nachfolgenden Figuren nur dann wiederholt, wenn es sinnvoll erscheint.

Fig. 1 zeigt perspektivisch in einer Seitenansicht ein der Erzeugung eines Viskositäts-Messwerts dienendes Viskositäts-Messgerät,

Fig. 2 zeigt teilweise geschnitten ein Ausführungsbeispiel eines für das Viskositäts-Messgerät von Fig. 1 geeigneten Messaufnehmers vom Vbrations-Typ perspektivisch in einer ersten Seitenansicht,

Fig. 3 zeigt den Messaufnehmer von Fig. 2 perspektivisch in einer zweiten Seitenansicht,

Fig. 4 zeigt ein Ausführungsbeispiel einer elektromechanischen Erregeranordnung für den Messaufnehmer von Fig. 2,

Fig. 5 zeigt schematisch nach der Art eines Blockschaltbildes eine bevorzugte Ausgestaltung einer für das Vskositäts-Messgerät der Fig. 1 bis 4 geeigneten Messgerät-Elektronik,

Fig. 6 zeigt teilweise nach Art eines Blockschaltbilds das Schaltbild eines Ausführungsbeispiels einer Erreger-Schaltung entsprechend der ersten Variante der Erfindung,

Fig. 7 zeigt teilweise nach Art eines Blockschaltbilds das Schaltbild eines Ausführungsbeispiels einer Erreger-Schaltung entsprechend der zweiten Variante der Erfindung,

Fig. 8 zeigt teilweise nach Art eines Blockschaltbilds das Schaltbild eines Ausführungsbeispiels einer Erreger-Schaltung entsprechend der ersten Variante der Erfindung,

Fig. 9 zeigt ein Schaltbild eines Ausführungsbeispiels einer bevorzugten Endstufe der Erregerschaltung nach Fig. 6,

Fig. 10 zeigt ein Schaltbild eines Ausführungsbeispiels einer bevorzugten Endstufe der Erregerschaltung nach Fig. 7 und

Fig. 11 zeigt ein Schaltbild eines Ausführungsbeispiels einer bevorzugten Endstufe der Erregerschaltung nach Fig. 8.

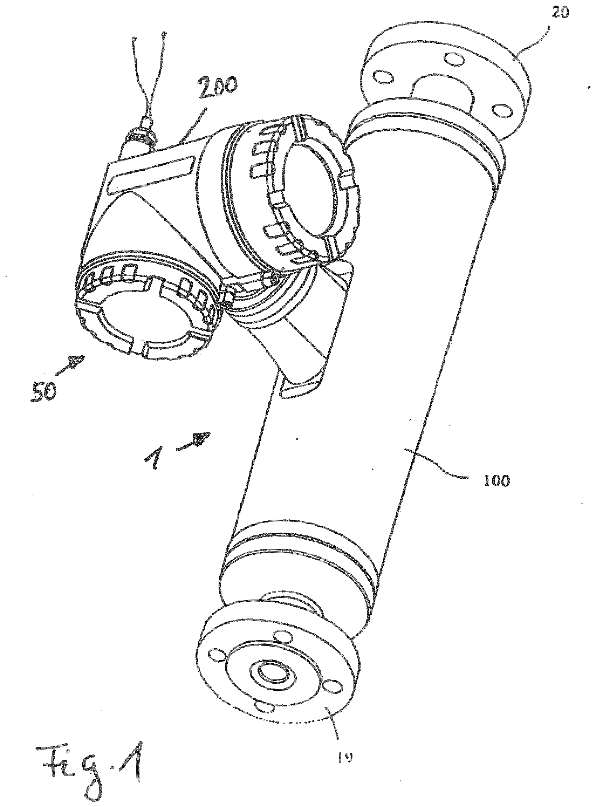

In Fig. 1 ist ein Viskositäts-Messgerät 1 mit einem, bevorzugt in einem Wandlergehäuse 100 untergebrachten, Messaufnehmer 10 vom Vibrationstyp sowie mit einem Elektronikgehäuse 200 dargestellt, in dem eine mit dem Messaufnehmer 10 elektrisch verbundene Messgerät-Elektronik 50 untergebracht ist; diese wird unten noch ausführlich beschrieben.

Das Viskositäts-Messgerät 1 dient dazu, eine Viskosität $\eta$ eines in einer Rohrleitung strömenden Fluids zu erfassen und in einen diese Viskosität $\eta$ momentan repräsentierenden Viskositäts-Messwert $X\eta$ abzubilden; die Rohrleitung ist aus übersichtlichkeitsgründen nicht dargestellt. Damit die Viskosität $\eta$ erfasst werden kann, werden mittels des von der Messgerät-Elektronik 50 zu Vibrationen erregten Messaufnehmers 10 im hindurchströmenden Fluid Reibungskräfte erzeugt, die von der Viskosität $\eta$ abhängig sind und die auf den Messaufnehmer 10 messbar, also sensorisch erfassbar und elektronisch auswertbar, zurückwirken.

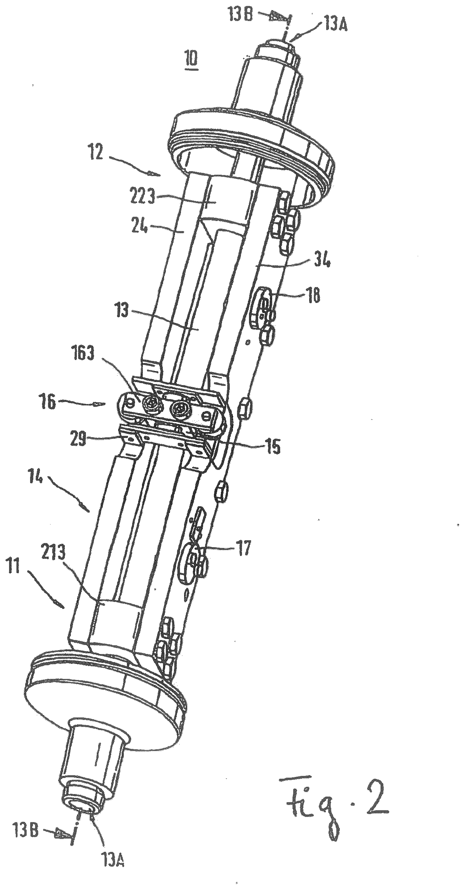

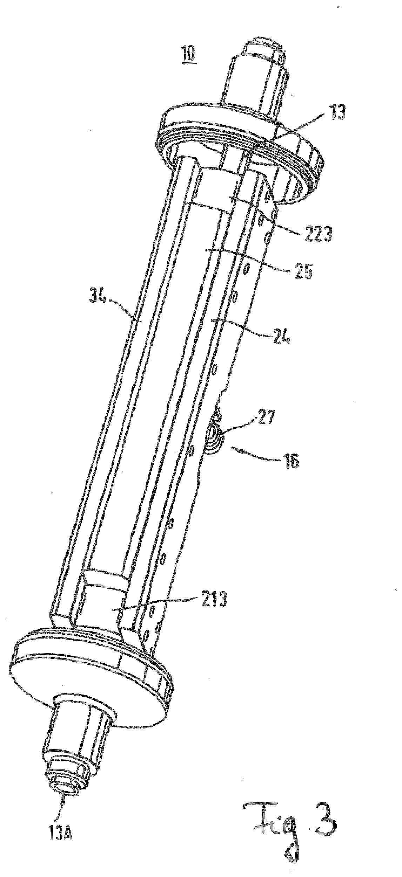

In den Fig. 2 und 3 ist ein Ausführungsbeispiel einer als Messaufnehmer 10 dienenden physikalischelektrischen Wandleranordnung vom Vibrations-Typ gezeigt. Der Aufbau einer derartigen Wandleranordnung ist z.B. in der US-A 60 06 609 ausführlich beschrieben, allerdings zur Messung anderer Strömungsgrößen.

Zum Führen des zu messenden Fluids umfasst der Messaufnehmer 10 wenigstens ein ein Einlassende 11 und ein Auslassende 12 aufweisendes Messrohr 13 von vorgebbarem, im Betrieb elastisch verformbarem Messrohrlumen 13A und von vorgebbarer Nennweite.

Elastisches Verformen des Messrohrlumens 13A bedeutet hier, dass zum Erzeugen von fluidintemen und somit das Fluid beschreibenden Reaktionskräften, nämlich von Scher- oder auch Reibungskräften des Messaufnehmers 10, eine Raumform und/oder eine Raumlage des Messrohrlumens 13A innerhalb eines Elastizitätsbereiches des Messrohrs 13 in vorgebbarer Weise zyklisch, insb. periodisch, verändert wird, vgl. z.B. die US-A 48 01 897, die US-A 56 48 616, die US-A 57 96 011 und/oder die US-A 60 06 609.

Es sei an dieser Stelle ausdrücklich darauf verwiesen, dass zur Realisierung der Erfindung anstelle eines Messaufnehmers gemäss dem Ausführungsbeispiel von Fig. 2 und 3 praktisch jeder der im Stand der Technik beschriebenen Messaufnehmer der genannten anderen Strömungsgrößen verwendet werden kann, insb. ein solcher vom Biegeschwingungstyp mit ausschließlich oder zumindest anteilig in einem Biegeschwingungsmode vibrierendem, gebogenem oder geradem Messrohr.

Weitere geeignete Ausführungsformen für solche als Messaufnehmer 10 dienende Wandleranordnungen sind z.B. in der US-A 53 01 557, der US-A 53 57 811, der US-A 55 57 973, der US-A 56 02 345, der US-A 56 48 616 oder der US-A 57 96 011 ausführlich beschrieben, deren Offenbarung zur Offenbarung der Anmeldung gehört.

Als Material für das in den Fig. 2 und 3 gerade Messrohr 13 sind z.B. Titanlegierungen besonders geeignet. Anstelle von Titanlegierungen können aber auch andere für derartige, insb. auch für gebogene, Messrohre üblicherweise verwendete Materialien wie z.B. rostfreier Stahl oder Zirconium etc. verwendet werden.

Das Messrohr 13, das in der üblichen Weise einlass-seitig und auslass-seitig mit der das Fluid zu- bzw. abführenden Rohrleitung kommuniziert, ist in einen starren, insb. biege- und verwindungssteifen, bevorzugt von einem Wandlergehäuse 100 umhüllten, Tragrahmen 14 schwingfähig eingespannt.

Der Tragrahmen 14 ist am Messrohr 13 einlass-seitig mittels einer Einlassplatte 213 und ausslass-seitig mittels einer Auslassplatte 223 fixiert, wobei letztere beide jeweils von entsprechenden Verlängerungsstücken des Messrohrs 13 durchstoßen sind. Ferner weist der Tragrahmen 14 eine erste Seitenplatte 24 und eine zweite Seitenplatte 34 auf, welche beiden Seitenplatten 24, 34 jeweils derart an der Einlassplatte 213 und an der Auslassplatte 223 fixiert sind, dass sie praktisch parallel zum Messrohr 13 verlaufen und von diesem sowie voneinander beabstandet angeordnet sind, vgl. Fig. 2. Somit sind einander zugewandte Seitenflächen der beiden Seitenplatten 24, 34 ebenfalls parallel zueinander.

Ein Längsstab 25 ist an den Seitenplatten 24, 34, vom Messrohr 13 beabstandet, fixiert, der als Schwingungen des Messrohrs 13 tilgende Auswuchtmasse

dient. Der Längstab 25 erstreckt sich, wie in Fig. 3 dargestellt ist, praktisch parallel zur gesamten schwingfähigen Länge des Messrohrs 13; dies ist jedoch nicht zwingend, der Längstab 25 kann selbstverständlich, falls erforderlich, auch kürzer ausgeführt sein.

Der Tragrahmen 14 mit den beiden Seitenplatten 24, 34, der Einlassplatte 213, der Auslassplatte 223 und dem Längsstab 25 hat somit eine Längsschwerelinie, die praktisch parallel zu einer das Einlassende 11 und das Auslassende 12 virtuell verbindenden Messrohr-Mittelachse 13B verläuft.

In den Fig. 2 und 3 ist durch die Köpfe der gezeichneten Schrauben angedeutet, dass das erwähnte Fixieren der Seitenplatten 24, 34 an der Einlassplatte 213, an der Auslassplatte 223 und am Längsstab 25 durch Verschrauben erfolgen kann; es können aber auch andere geeignete und dem Fachmann geläufige Befestigungsarten angewendet werden.

Für den Fall, dass der Messaufnehmer 10 lösbar mit der Rohrleitung zu montieren ist, ist dem Messrohr 13 einlass-seitig ein erster Flansch 19 und auslassseitig ein zweiter Flansch 20 angeformt, vgl. Fig. 1; anstelle der Flansche 19, 20 können aber z.B. auch andere Rohrleitungs-Verbindungsstücke zur lösbaren Verbindung mit der Rohrleitung angeformt sein, wie z.B. die in Fig. 2 angedeuteten sogenannten Triclamp-Anschlüsse. Falls erforderlich kann das Messrohr 13 aber auch direkt mit der Rohrleitung, z.B. mittels Schweissen oder Hartlötung etc. verbunden werden bzw. sein

Zum Erzeugen der erwähnten Reibungskräfte wird das Messrohr 13 im Betrieb des Messaufnehmers 10, angetrieben von einer mit dem Messrohr gekoppelten elektro-mechanischen Erregeranordnung 16, bei einer vorgebbaren Schwingfrequenz, insb. einer natürlichen Resonanzfrequenz, im sogenannten Nutzmode vibrieren gelassen und somit in vorgebbarer Weise elastisch verformt; es wird angemerkt, dass diese Resonanzfrequenz auch von einer Dichte des Fluids abhängig ist.

Im gezeigten Ausführungsbeispiel wird das vibrierende Messrohr 13, wie bei solchen Wandleranordnungen vom Biegeschwingungs-Typ üblich, aus einer statischen Ruhelage räumlich, insb. lateral, ausgelenkt; Gleiches gilt praktisch auch für solche Wandleranordnungen, bei denen ein oder mehrere gebogene Messrohre Auslegerschwingungen um eine entsprechende, das jeweilige Einlass- und Auslassende virtuell verbindende Längsachse ausführen, oder auch für solche Wandleranordnungen, bei denen ein oder mehere gerade Messrohre lediglich ebene Biegeschwingungen um ihre Messrohrlängsachse ausführen.

In einem weiteren Fall, dass als Messaufnehmer 10, wie z.B. in der erwähnten WO-A 95/16 897 beschrieben, eine Wandleranordnung vom peristaltischen Radialschwingungs-Typ dient und der Querschnitt des vibrierenden Messrohr in der dafür üblichen Weise symmetrisch verformt wird, verbleibt die Messrohrlängsachse in ihrer statischen Ruhelage.

Die Erregeranordnung 16 dient dazu, unter Umsetzung einer von der Messgerät-Elektronik 50 eingespeisten elektrischen Erregerleistung $P_{exc}$ eine auf das Messrohr 13 einwirkende Erregerkraft $F_{exc}$ zu erzeugen. Die Erregerleistung $P_{exc}$ dient praktisch lediglich zur Kompensation des über mechanische und fluidinterne Reibung dem Schwingungssystem entzogenen Leistungsanteils. Zur Erzielung eines möglichst hohen Wirkungsgrades ist die Erregerleistung $P_{exc}$ möglichst genau so eingestellt, dass praktisch die Schwingungen des Messrohrs 13 im Nutzmode, z.B. die einer Grund-Resonanzfrequenz, aufrecht erhalten werden.

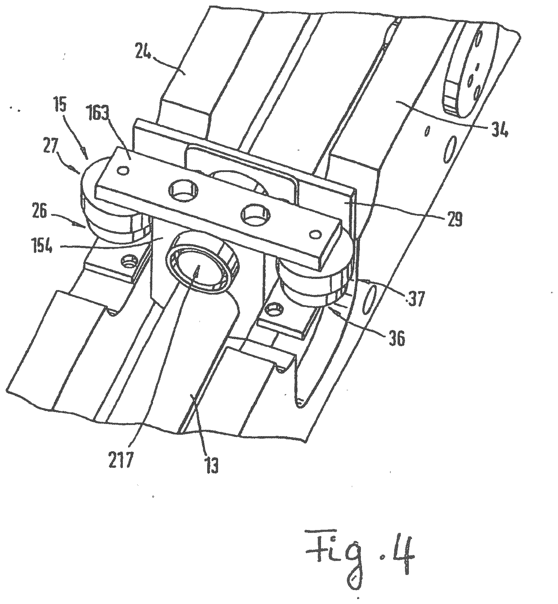

Zum Zwecke des Übertragens der Erregerkraft $F_{exc}$ auf das Messrohr 13 weist die Erregeranordnung 16, wie in Fig. 4 dargestellt ist, eine starre, elektromagnetisch und/oder elektrodynamisch angetriebene Hebelanordnung 15 mit einem am Messrohr 13 biegefest fixierten Ausleger 154 und mit einem Joch 163 auf. Das Joch 163 ist an einem vom Messrohr 13 beabstandeten Ende des Auslegers 154 ebenfalls biegefest fixiert, und zwar so, dass es oberhalb des Messrohrs 13 und quer zu ihm angeordnet ist.

Als Ausleger 154 kann z.B. eine metallische Scheibe dienen, die das Messrohr 13 in einer Bohrung aufnimmt. Für weitere geeignete Ausführungen der Hebelanordnung 15 sei an dieser Stelle auf die bereits erwähnte US-A 60 06 609 verwiesen. Die Hebelanordnung 15 ist T-förmig und so angeordnet, vgl. Fig. 4, dass sie etwa in der Mitte zwischen Einlass- und Auslassende 11, 12 auf das Messrohr 13 einwirkt, wodurch dieses im Betrieb mittig seine größte laterale Auslenkung erfährt.

Zum Antreiben der Hebelanordnung 15 umfasst die Erregeranordnung 16 gemäß Fig. 4 eine erste Erregerspule 26 und einen zugehörigen ersten dauermagnetischen Anker 27 sowie eine zweite Erregerspule 36 und einen zugehörigen zweiten dauermagnetischen Anker 37. Die beiden, elektrisch bevorzugt in Reihe geschalteten, Erregerspulen 26, 36 sind beiderseits des Messrohrs 13 unterhalb des Jochs 163 am Tragrahmen 14, insb. lösbar, so fixiert, dass sie mit ihrem jeweils zugehörigen Anker 27 bzw. 37 im Betrieb in Wechselwirkung stehen. Die beiden Erregerspulen 26, 36, können, falls erforderlich, selbstverständlich auch einander parallelgeschaltet sein.

Wie in Fig. 2 und 4 dargestellt ist, sind die beiden Anker 27, 37 derart voneinander beabstandet am Joch 163 fixiert, dass im Betrieb des Messaufnehmers 10 der Anker 27 praktisch von einem Magnetfeld der Erregerspule 26 und der Anker 37 praktisch von einem Magnetfeld der Erregerspule 36 durchsetzt und aufgrund entsprechender elektrodynamischer und/oder elektromagnetischer Kraftwirkungen bewegt wird.

Die mittels der Magnetfelder der Erregerspulen 26, 36 erzeugten Bewegungen der Anker 27, 37 werden vom Joch 163 und vom Ausleger 154 auf das Messrohr 13 übertragen. Diese Bewegungen der Anker 27, 37 sind so ausgebildet, dass das Joch 163 alternierend in Richtung der Seitenplatte 24 oder in Richtung der Seitenplatte 34 aus seiner Ruhelage ausgelenkt wird. Eine entsprechende, zur bereits erwähnte Messrohr-Mittelachse 13B parallele Drehachse der Hebelanordnung 15 kann z.B. durch den Ausleger 154 verlaufen.

Der Tragrahmen 14 umfasst ferner eine mit den Seitenplatten 24, 34, insb. lösbar, verbundene Halterung 29 für die elektromechanische Erregeranordnung 16, insb. zum Haltern der Erregerspulen 26, 36 und ggf. einzelner Komponenten einer weiter unten genannten Magnetbremsanordnung 217.

Beim Messaufnehmer 10 des Ausführungsbeispiels bewirken die lateralen Auslenkungen des am Einlassende 11 und am Auslassende 12 fest eingespannten, vibrierenden Messrohrs 13 gleichzeitig eine elastische Verformung seines Messrohrlumens 13A, die praktisch über die gesamte Länge des Messrohrs 13 ausgebildet ist.

Ferner wird im Messrohr 13 aufgrund eines über die Hebelanordnung 15 auf dieses wirkenden Drehmoments gleichzeitig zu den lateralen Auslenkungen zumindest abschnittsweise eine Verdrehung um die Messrohr-Mittelachse 13B erzwungen, so dass das Messrohr 13 praktisch in einem als Nutzmode dienenden gemischten Biegeschwingungs-Torsionsmode schwingt.

Die Verdrehung des Messrohrs 13 kann dabei so ausgebildet sein, dass eine laterale Auslenkung des vom Messrohr 13 beabstandeten Ende des Auslegers 154 entweder gleich- oder entgegen-gerichtet zur lateralen Auslenkung des Messrohrs 13 ist. Das Messrohr 13 kann also Torsionsschwingungen in einem dem gleich-gerichteten Fall entsprechenden ersten Biegeschwingungs-Torsionsmode oder in einem dem entgegen-gerichtet Fall entsprechenden zweiten Biegeschwingungs-Torsionsmode ausführen. Dann ist beim Messaufnehmer 10 gemäss dem Ausführungsbeispiel die natürliche Grund-Resonanzfrequenz des zweiten Biegeschwingungs-Torsionsmodes von z.B. 900 Hz annähernd doppelt so hoch wie die des ersten Biegeschwingungs-Torsionsmodes.

Für den Fall, dass das Messrohr 13 betriebsmäßig Schwingungen lediglich im zweiten Biegeschwingungs-Torsionsmode ausführen soll, ist eine auf dem Wirbelstromprinzip beruhende Magnetbremsanordnung 217 in die Erregeranordnung 16 integriert, die dazu dient, die Lage der erwähnten Drehachse zu stabilisieren. Mittels der Magnetbremsanordnung 217 kann somit sichergestellt werden, dass das Messrohr 13 stets im zweiten Biegeschwingungs-Torsionsmode schwingt und somit allfällige äußere Störeinflüsse auf das Messrohr 13 nicht zu einem spontanen Wechsel in einen anderen, insb. nicht in den ersten, Biegeschwingungs-Torsionsmode führen. Einzelheiten einer solchen Magnetbremsanordnung sind in der US-A 60 06 609 ausführlich beschrieben.

Es sei an dieser Stelle noch erwähnt, dass bei dem auf diese Weise gemäß dem zweiten Biegeschwingungs-Torsionsmode ausgelenkten Messrohr 13 die gedachte Messrohr-Mittelachse 13B praktisch leicht deformiert wird und somit bei den Schwingungen keine Ebene sondern eine schwach gewölbte Fläche aufspannt. Ferner weist eine in dieser Fläche liegende, vom Mittelpunkt der Messrohr-Mittelachse beschriebene Bahnkurve die kleinste Krümmung aller von der Messrohr-Mittelachse beschriebenen Bahnkurven auf.

Zum Detektieren der Verformungen des Messrohrs 13 umfasst der Messaufnehmer 10 ferner eine Sensoranordnung 60, die mittels wenigstens eines auf Vibrationen des Messrohrs 13 reagierenden ersten Sensors 17 ein diese repräsentierendes erstes, insb. analoges, Sensorsignal s1 erzeugt. Der Sensor 17 kann z.B. mittels eines dauermagnetischen Ankers gebildet sein, der am Messrohr 13 fixiert ist und mit einer vom Tragrahmen 14 gehalterten Sensorspule in Wechselwirkung steht.

Als Sensor 17 sind besonders solche geeignet, die, basierend auf dem elektrodynamischen Prinzip, eine Geschwindigkeit der Auslenkungen des Messrohrs 13 erfassen. Es können aber auch beschleunigungsmessende elektrodynamische oder aber auch wegmessende resistive oder optische Sensoren verwendet werden. Selbstverständlich können auch andere dem Fachmann bekannte und für die Detektion solcher Vibrationen geeignete Sensoren verwendet werden.

Die Sensoranordnung 60 umfasst ferner einen, insb. zum ersten Sensor 17 identischen, zweiten Sensor 18, mittels dem sie ein ebenfalls Vibrationen des Messrohrs 13 repräsentierendes zweites Sensorsignal s2 liefert. Die beiden Sensoren 17, 18 sind bei dieser Ausgestaltung entlang des Messrohrs 13 voneinander beabstandet, insb. in einem gleichen Abstand von der Mitte des Messrohrs 13, so im Messaufnehmer 10 angeordnet, dass mittels der Sensoranordnung 60 sowohl einlassseitige als auch auslass-seitige Vibrationen des Messrohrs 13 örtlich erfasst und in die entsprechenden Sensorsignale s1 bzw. s2 abgebildet werden.

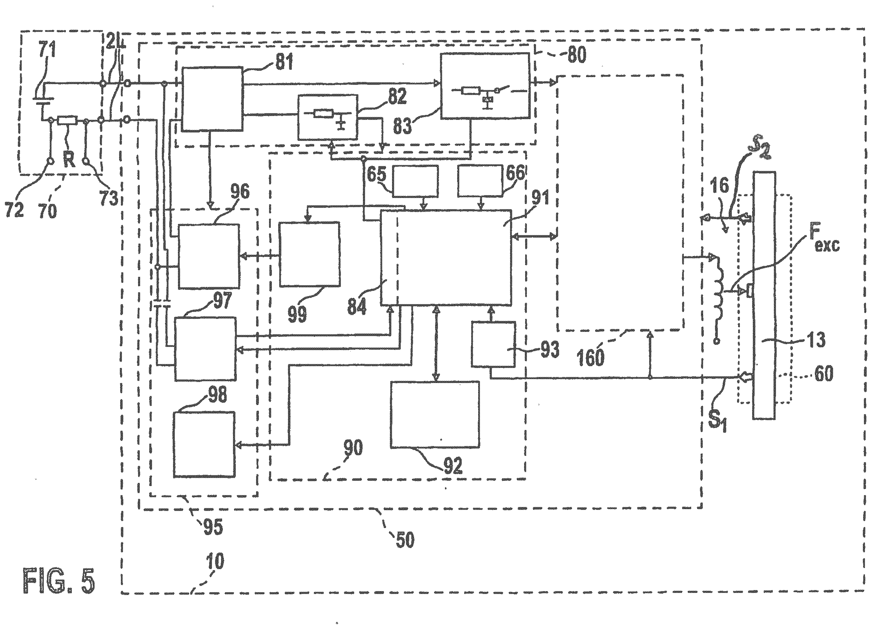

Das erste und ggf. das zweite Sensorsignal s1 bzw. s2, die üblicherweise jeweils eine der momentanen Schwingfrequenz des Messrohrs 13 entsprechende Signalfrequenz ausweisen, sind, wie in Fig. 5 gezeigt, der Messgerät-Elektronik 50 zugeführt.

Zum Vibrierenlassen des Messrohrs 13 wird die Erregeranordnung 16 mittels eines von der Messgerät-Elektronik 50 gelieferten, gleichfalls oszillierenden Erregerstroms $i_{exc}$ von einstellbarer Amplitude und von einstellbarer Erregerfrequenz $f_{exc}$ derart gespeist, dass die Erregerspulen 26, 36 im Betrieb von diesem durchflossen sind und in entsprechender Weise die zum Bewegen der Anker 27, 37 erforderlichen Magnetfelder erzeugt werden. Der Erregerstrom $i_{exc}$ ist sinusförmig.

Die Erregerfrequenz $f_{exc}$ des Erregerstroms $i_{exc}$ ist beim Ausführungsbeispiel so gewählt und sie stellt sich so ein, dass das lateral schwingende Messrohr 13 möglichst ausschliesslich im zweiten Biegeschwingungs-Torsionsmode torsional schwingt.

In Fig. 5 ist schematisch nach Art eines Blockschaltbildes eine bevorzugte Ausgestaltung einer für das Viskositäts-Messgerät der Fig. 1 bis 4 geeigneten Messgerät-Elektronik 50 dargestellt. In Fig. 5 sind rechts schematisch das Meßrohr 13, die Erregeranordnung 16 und die Sensoranordnung 60 dargestellt, wobei die Erregerspule 26 eigens gezeichnet ist; sie liegt an einem Schaltungsnullpunkt SN des Vibrations-Messgeräts 1.

Die erwähnte Messgerät-Elektronik 50 ist durch die gestrichelte Einrahmung angedeutet und mit einer Zwei-Leiter-Prozesskontroll-Schleife 2L verbunden, die im Folgenden kurz als Schleife bezeichnet ist. Sie führt vom Viskositäts-Messgerät 1 z.B. zu einer Prozesskontroll-Warte 70. Dort ist die Schleife 2L mit einer Serienschaltung aus einer äußeren einen Schleifen-Strom in die Schleif 2L einspeisenden Energiequelle 71, z.B. einer Gleichspannungsquelle, und aus einem Messwiderstand R verbunden; dieser ist mit zwei Mess-Anschlüssen 72. 73 versehen, damit daran das Viskositätssignal als Spannungsabfall abgreifbar ist, der zur Anzeige gebracht werden oder einer weiteren Signalverarbeitung zugeführt werden kann. Die Energiequelle 70 versorgt somit die Messgerät-Elektronik 50 mit der zu ihrem Betrieb erforderlichen Energie. Wenn Die Schleife 2L nach dem in der industriellen Messtechnik seit langem eingeführten Strom-Standard von 4 mA bis 20 mA arbeitet, steht für die Energieversorgung der Strombereich zwischen 0 mA und 3,6 mA zur Verfügung.

Die Schleife 2L führt mit ihren beiden Leitern innerhalb der Messgerät-Elektronik 50 zunächst zu einem Spannungsregler 81, der aus der meist schwankenden Spannung der Energiequelle 70 eine ausreichend konstante Spannung erzeugt. Mit dieser konstanten Spannung werden alle Teilschaltungen der Messgerät-Elektronik 50 dauernd oder intermittierend gespeist, s. hierzu unten.

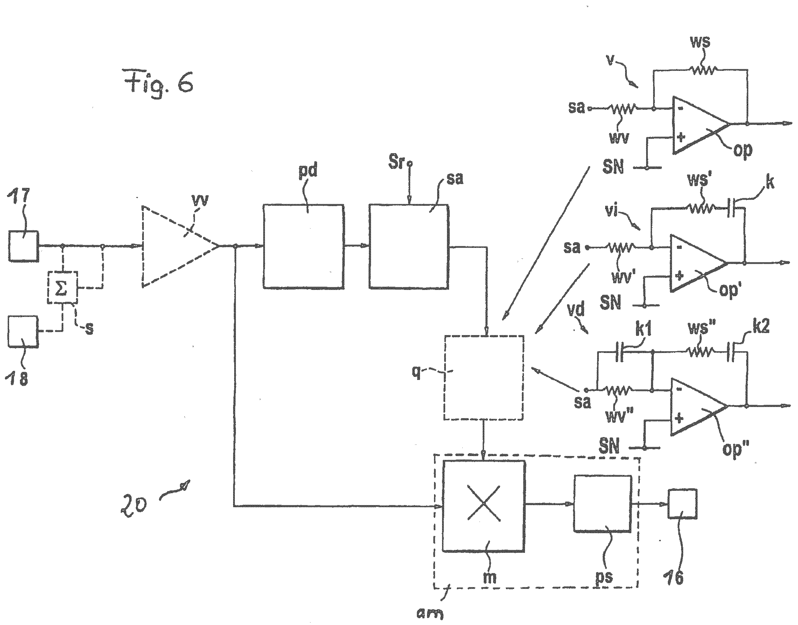

Die Messgerät-Elektronik 50 enthält zur Speisung der Erregeranordnung 16 mit dem erwähnten Erregerstrom $i_{exc}$ eine Erregerschaltung 160; bevorzugte Ausführungsbeispiele davon sind anhand der Fig. 6 bis 11 erläutert. Hier sei zunächst lediglich erwähnt, dass das Sensorsignal s1 des Sensors 16 der Erregerschaltung 160 zugeführt ist.

Wie in Fig. 5 dargestellt steht die Erregerschaltung 160 auch in Kontakt mit einem Mikroprozessor 91 einer Auswerteschaltung 90, von dem die Erregerschaltung 160 z.B. die erforderlichen Betriebsdaten empfängt oder an den die Erregerschaltung 160 intern erzeugte Einstellsignale und/oder -parameter, insb. auch Informationen Ober den eingestellten Erregerstrom $i_{exc}$ und/oder die in den Messaufnehmer eingespeiste Erregerleistung $P_{exc}$ sendet. Zusätzlich zum oder anstelle des Mikroprozessors 91 kann Auswerteschaltung 90 auch einen der Erzeugung von Meß- und Betriebsdaten dienenden digitalen Signalprozessor aufweisen.

Die seitens der Auswerteschaltung 90 erzeugten und/oder empfangenen Meß- oder Betriebsdaten können z.B. in einem Datenspeicher 92 flüchtig abgespeichert werden.

Nach einer bevorzugten Ausgestaltung der Erfindung ist auch das Sensorsignal s1 der Auswerteschaltung 90 direkt zugeführt. Dort gelangt letzteres via Analog/Digital-Wandler 93 digitalisiert zu einem Mikro- und Signalprozessor 91, der mittels des Sensorsignals s1 den Viskositäts-Messwert $X_\eta$ liefert. Dem Mikro- und Signalprozessor 91 sind ein Systemtakt-Generator 65 und eine Watch-Dog- und Reset-Stufe 66 zugeordnet.

Mittels eines Stromreglers 96, dem ein vom digitalen Viskositäts-Meßwert $D_\eta$ gespeister Digital Analog-Wandler 99 vorgeschaltet ist, moduliert die Messgerät-Elektronik 50 den Viskositäts-Messwert $X_\eta$ auf eine Amplitude des in der Schleife 2L fließenden Schleifen-Stroms. Anders gesagt, durch das Einstellen der Amplitude des Schleifen-Stroms in Abhängigkeit vom momentanen Viskositäts-Messwert $X_\eta$ speist die Messgerät-Elektronik 50 ein mit dem Viskositäts-Messwert $X_\eta$ korrespondierendes Viskositätssignal in die Schleife 2L ein.

Nach einer bevorzugten Ausgestaltung der Erfindung ist in der Messgerät-Elektronik 50 ferner eine Kommunikations-Schnittstelle 97 vorgesehen, die dazu dient neben dem Viskositäts-Messwert $X_\eta$ z.B. auch interne Meßgeräte-Parameter in via Schleife 2L übertragbare Signale umzuwandeln und in die Schleife 2L einzukoppeln oder aber auch von extern via Schleife 2L übertragene Meßgeräte-Parameter zu empfangen. Als Kommunikations-Schnittstelle 97 kann hierbei z.B. eine Schnittstelle nach dem HART©-Feld-Kommunikations-Protokoll gemäß der HART© *Communication Foundation*, Austin TX, sein, die also FSK-codierte höher frequente Wechselspannungen als Signalträger verwendet.

Erfindungsgemäß enthält die Messgerät-Elektronik 50 mindestens einen an die Schleife 2L gekoppelten Energiepuffer; in Fig. 5 sind davon zwei zu sehen, nämlich die Energiepuffer 82, 83. Mittels eines solchen Energiepuffers ist es möglich, die von der Messgerät-Elektronik 50 benötigte Leistung mindestens teilweise und/oder mindestens zeitweise bereitzustellen, insb. aber dann, wenn die von der Schleife 2L momentan zur Verfügung gestellte Energie zum Betrieb der Messgerät-Elektronik 50 nicht ausreicht.

Der Energiepuffer 82 liegt dauernd sowohl am Spannungsregler 81 als auch an der Auswerte-Schaltung 90, so dass er nach Bedarf auf- und entladen wird. Demgegenüber liegt der Energiepuffer 83 über einen Schalter an der Erregerschaltung 160, mittels dem die Entladung unterbrochen werden kann.

Nach einer weiteren bevorzugten Ausgestaltung der Erfindung ist der Bedarf der Messgerät-Elektronik 50 an elektrischer Leistung, also deren Leistungsaufnahme variierbar und kann somit an die aktuell an die zur Verfügung stehende elektrische Leistung angepaßt werden. Das Varieren des Leistungsbedarfs der Messgerät-Elektronik 50 kann dabei z.B.in Abhängigkeit von der momentan verfügbaren Leistung gesteuert oder aber auch zeitgetaktet erfolgen. Zum Zwecke der Steuerung der Leistungsaufnahme ist daher ferner in der Meßgerät-Elektronik 50 des erfindungsgemäßen Viskositätsmessgeräts eine Steuerschaltung 84 vorgesehen, die z.B. mittels des Mikro- und Signalprozessors 91 realisiert sein kann.

Die Regulierung des Bedarfs an elektrischer Leistung kann dabei z.B. so erfolgen, dass Steuerschaltung 84 die Erregerschaltung 160 und/oder die Auswerteschaltung 90 zum Reduzieren der Leistungsaufnahme zeitweise deaktiviert. Deaktivieren der Auswerteschaltung 90 heißt hierbei z.B., das letztere in einen Betriebszustand von niedriger Leistungsaufnahme versetzt wird, bei dem zumindest die zur Steuerung des Energiespeichers bzw. zur Reaktivierung der Auswerteschaltung erforderlichen Funktionen in Betrieb belassen werden und bei dem die für den Betrieb der Auswerteschaltung 90 nach deren Reaktivierung erforderlichen den Meßdaten und/oder Betriebsparameter in einem Datenspeicher, z.B. im flüchtigen Datenspeicher 92, entsprechend verfügbar gehalten werden. Des weiteren kann die Erregerschaltung z.B. auch dadurch deaktiviert werden, indem sie völlig abgeschaltet wird.

In Fig. 6 ist teilweise nach Art eines Blockschaltbilds das Schaltbild eines Ausführungsbeispiels der Erreger-Schaltung 160 entsprechend der ersten Variante der Erfindung dargestellt. Einer Amplitudendemodulationsstufe pd ist als Eingangssignal eines der von den Sensoren 17, 18 gelieferten Sensorsignale oder z.B. auch deren Summe zugeführt. Somit ist die Amplitudendemodulationsstufe pd eingangsseitig mit einem der Sensoren 17,18 verbunden - in Fig. 6 ist das der Sensor 17. Die Amplitudendemodulationsstufe pd dient dazu, fortwährend eine Schwingungsamplitude der Meßrohrvibrationen zu bestimmen. Des weiteren dient die Amplitudendemodulationsstufe pd dazu, ein Ausgangssignal, z.B. ein einfaches Gleichsignal, zu liefern, das diese erfaßte Schwingungsamplitude repräsentiert. Dafür ist nach einer bevorzugten Ausgestaltung der Erfindung in der Amplitudendemodulationsstufe pd ein Spitzenwertdetektor für das Eingangssignal vorgesehen. Anstelle dieses Spitzenwertdetektors kann aber z.B. auch ein Synchrongleichrichter zum Erfassen der Schwingungsamplitude verwendet werden, der von einem zum Eingangssignal phasengleichen Referenzsignal getaktet ist.

Ein erster Eingang einer Vergleichsstufe sa ist mit einem Ausgang der Amplitudendemodulationsstufe pd verbunden; einem zweiten Eingang der Vergleichsstufe sa ist ein einstellbares Referenzsignal Sr zugeführt, das eine Amplitude der Vibration des Meßrohr 13 vorgibt. Die Vergleichsstufe sa ermittelt eine Abweichung des Ausgangssignals der Amplitudendemodulationsstufe pd vom Referenzsignal Sr und gibt diese als ein entsprechende Ausgangsignal aus. Diese Abweichung kann z.B. unter Verwendung einer einfachen Differenz zwischen der erfaßten und der durch das Referenzsignal Sr vorgegebenen Schwingungsamplitude inform eines absoluten Amplitudenfehlers oder z.B. auch unter Verwendung eines Quotienten aus erfaßter und vorgegebener Schwingungsamplitude inform eines relativen Amplitudenfehlers bestimmt und weitergegeben werden.

Einem ersten Eingang einer Amplitudenmodulationsstufe am ist das Eingangssignal der Amplitudendemodulationsstufe pd und einem zweiten Eingang das Ausgangssignal der Vergleichsstufe sa zugeführt. Die Amplitudenmodulationsstufe am dient dazu, das Eingangssignal der Amplitudendemodulationsstufe pd mit dem dem Ausgangssignal der Vergleichsstufe sa amplituden zu modulieren. Dabei ist ein Sensorsignal bzw. die Summe der beiden Sensorsignale - bzw. ein dazu jeweils proportionales Signal, s.u. - das Trägersignal und ein mittels der Vergleichsstufe sa erzeugtes Fehlersignal das Modulationssignal, das - immerhin langsam - veränderlich ist. Das Fehlersignal stellt die Abweichung der momentanen Vibrationsamplitude des Meßrohrs 13 von dessen bzw. deren durch das Referenzsignal Sr repräsentierten Soll-Schwingungsamplitude dar. Des weiteren dient die Amplitudenmodulationsstufe am dazu, ein die Antriebsergie tragendes Treibersignal für die Erregeranordnung 16 zu liefern. Dafür weist die Amplitudenmodulationsstufe am eine entsprechende Enstufe ps zum Verstärken des mit dem Modulationssignal modulierten Trägersignals.

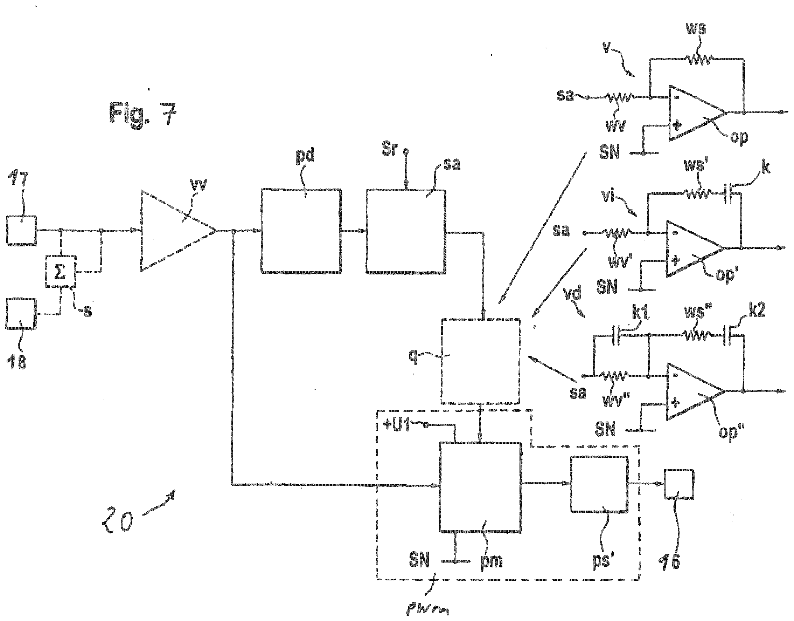

Zum Zwecke der Amplitudenmodulation des Träger- mit dem Modulationssignal ist nach einer bevorzugten Ausgestaltung der Erfindung in der Amplitudenmodulationsstufe am ein ein Multiplizierer m vorgesehen, vgl. Fig. 7.

In Fig. 7 ist teilweise nach Art eines Blockschaltbilds das Schaltbild eines Ausführungsbeispiels einer Erreger-Schaltung 160 entsprechend der zweiten Variante der Erfindung dargestellt. Das Ausführungsbeispiel der Fig. 7 unterscheidet sich von dem der Fig. 6 dadurch, dass anstatt von deren Amplitudenmodulationsstufe am eine Pulsweitenmodulationsstufe pwm mit einem von einem externe Wechselsignal getakteten Pulsdauermodulator pm vorgesehen ist. Der Pulsdauermodulator pm ist, wie in Fig. 7 gezeigt, an einer konstanten positiven ersten Gleichspannung +U1 betrieben und liegt am Schaltungsnullpunkt SN.

Einem ersten Eingang des Pulsdauermodulators pm - das ist der Trägersignal-Eingang - ist das Eingangssignal der Amplitudendemodulationsstufe pd zugeführt. Somit ist dieser erste Eingang mit einem der Sensoren verbunden - in Fig. 7 ist das wieder der Sensor 7. Einem zweiten Eingang des Pulsdauermodulators pm - das ist der Modulationssignal-Eingang - ist das zum ermittelten Amplitudenfehler proportionale Fehlersignal zugeführt. Der Ausgang des Pulsdauermodulators pm wiederum ist mit dem Eingang einer Endstufe ps' verbunden, die ausgangsseitig die Erregeranordnung 6 mit einem entsprechenden Treibersignal speist. Das von der Endstufe ps' gelieferte Treibersignal ist hierbei ein Rechtecksignal, das mit einer Signalfrequenz des Eingangssignals der Amplitudendemodulationsstufe pd getaktet ist und das eine mit dem Ausgangssignal der Vergleichsstufe sa modulierte Pulsweite aufweist.

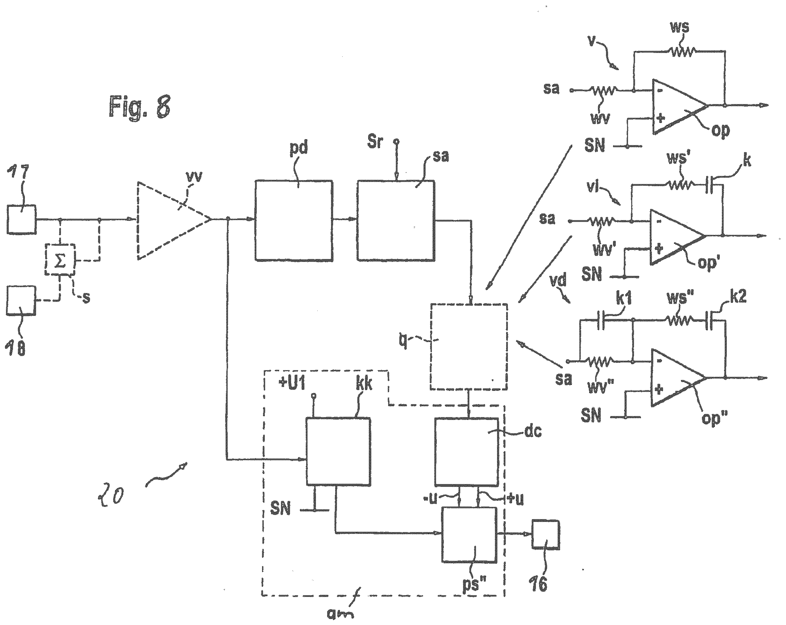

In Fig. 8 ist teilweise nach Art eines Blockschaltbilds das Schaltbild eines weiteren Ausführungsbeispiels einer Erreger-Schaltung 160 entsprechend der ersten Variante der Erfindung dargestellt. Das Ausführungsbeispiel der Fig. 8 unterscheidet sich von dem der Fig. 6 dadurch, dass anstatt von deren Multiplizierer m ein Komparator kk und ein Gleichspannungswandler dc vorgesehen sind, der wenigstens eine einen in der Erregeranordnung 6 fließenden, geschalteten Erregerstrom treibende Versorgungsspannung liefert. Die Amplitude dieser Versorgungsspannung wiederum ist abhängig von dem Ausgangssignal der Vergleichsstufe sa und daher als nicht-konstant zu betrachten. Je nach Auslegung der Versorgungsspannung kann der Erregerstrom bi-polar oder aber auch uni-polar sein.

Daher liefert der Gleichspannungswandler dc nach einer bevorzugten Ausgestaltung der Erfindung gemäß Fig. 8 eine Versorgungsspannung mit einem positiven ersten Potential +u und einem negativen zweiten Potential -u, wobei ein dem Einstellen der Potentiale dienender Steuer-Eingang des Gleichspannungswandler dc das Ausgangssignal der Vergleichsstufe sa empfängt. Die vom Gleichspannungswandler dc gelieferte, in ihrer Amplitude angepaßte Versorgungsspannung ist einer entsprechenden, dem Speisen der Erregeranordnung 16 dienenden Endstufe ps" der Pulsweitenmodulationsstufe pwm als Betriebsspannung angelegt. Außerdem ist die Endstufe ps" eingangsseitig mit dem einen Ausgang des Komparators kk verbunden. Der Komparator kk ist an der konstanten positiven ersten Gleichspannung +U1 betrieben und liegt am Schaltungsnullpunkt SN. Einem Eingang des Komparators kk ist das Eingangssignal des Spitzenwertdetektors pd zugeführt. Somit ist der Komparator kk eingangsseitig mit einem der Sensoren verbunden - in Fig. 8 ist das wieder der Sensor 17.

In den Fig. 6 bis 7 ist jeweils gestrichelt angedeutet, dass anstatt eines der Sensorsignale der Sensoren 17, 18 auch deren Summe dem Spitzenwertdetektor pd und dem Multiplizierer m bzw. dem Pulsdauermodulator pm bzw. dem Komparator kk zugeführt werden kann; dann sind diese Sensorsignale über einen Summierer s zu führen.

In den Fig. 6 bis 7 sind weitere gestrichelt gezeichnete Teilschaltungen zu sehen, die bevorzugte Weiterbildungen der bevorzugten Erreger-Schaltung 160 darstellen.

In einer Weiterbildung der Erregerschaltung 160 ist ein Vorverstärker w vorgesehen, der dem Spitzenwertdetektor pd oder ggf. dem Synchrongleichrichter vorgeschaltet ist.

In einer anderen Weiterbildung der Erregerschaltung 160 ist ein Verstärker v vorgesehen, der das Ausgangssignal der Vergleichsstufe sa verstärkt, bevor es als Fehlersignal zur Amplitudenmodulationsstufe am gelangt. Ein solcher Verstärker kann ein Operationsverstärker op sein, dessen nicht-invertierender Eingang am Schaltungsnullpunkt SN liegt, dessen invertierender Eingang über einen Vorwiderstand wv mit dem Ausgang der Vergleichsstufe sa und über einen Shuntwiderstand ws mit dem Verstärker-Ausgang verbunden ist. Der derart beschaltete Operationsverstärker op ist jeweils rechts oben in den Fig. 6 bis 7 zu sehen.

In einer weiteren bevorzugten Weiterbildung der Erregerschaltung 160 ist ein integrierender Verstärker vi vorgesehen, der das Ausgangssignal der Vergleichsstufe sa verstärkt und integriert, bevor es als Fehlersignal zum Multiplizierer m gelangt. Ein solcher Verstärker kann ein Operationsverstärker op' sein, dessen nicht-invertierender Eingang am Schaltungsnullpunkt SN liegt, dessen invertierender Eingang über einen Vorwiderstand wv' mit dem Ausgang der Vergleichsstufe sa und über eine Serienschaltung aus einen Shuntwiderstand ws' und einem Kondensator k mit dem Verstärker-Ausgang verbunden ist. Der derart beschaltete Operationsverstärker op' ist jeweils rechts in der Mitte der Fig. 6 bis 7 zu sehen.

Eine andere Weiterbildung der Erregerschaltung 160 besteht in einem differenzierenden und integrierenden Verstärker vd, der das Ausgangssignal der Vergleichsstufe sa verstärkt, differenziert und integriert, bevor es als Fehlersignal zum Multiplizierer m gelangt. Ein solcher Verstärker kann ein Operationsverstärker op" sein, dessen nicht-invertierender Eingang am Schaltungsnullpunkt SN liegt, dessen invertierender Eingang über eine Parallelschaltung eines Vorwiderstands wv" und eines ersten Kondensators k1 mit dem Ausgang der Vergleichsstufe sa und über eine Serienschaltung aus einen Shuntwiderstand ws" und einem zweiten Kondensator k2 mit dem Verstärker-Ausgang verbunden ist. Der derart beschaltete Operationsverstärker op" ist jeweils rechts unten in den Fig. 6 bis 7 zu sehen.

Mittels der Pfeile ist in den Fig. 6 bis 7 angedeutet, dass der jeweilige Verstärker v, vi, vd an die Stelle des gestrichelt gezeichneten Quadrats q zu setzen ist, das entweder zwischen dem Ausgang der Vergleichsstufe sa und dem zweiten Eingang des Amplitudenmodulationsstufe am oder aber zwischen dem Ausgang der Vergleichsstufe sa und dem Modulationssignal-Eingang der Pulsweitenmodulationsstufe pwm liegt.

Es liegt im Rahmen der Erfindung, dass die Funktionen der einzelnen Teilschaltungen der Fig. 6 bis 7 durch entsprechende analoge oder digitale Teilschaltungen realisiert werden, in letzterem Fall also z.B. mittels eines geeignet programmierten Mikroprozessors, wobei die diesem zuzuführenden Signale zuvor einer Analog/Digital-Wandlung und dessen Ausgangssignale gegebenenfalls einer Digital/Analog-Wandlung zu unterziehen sind.

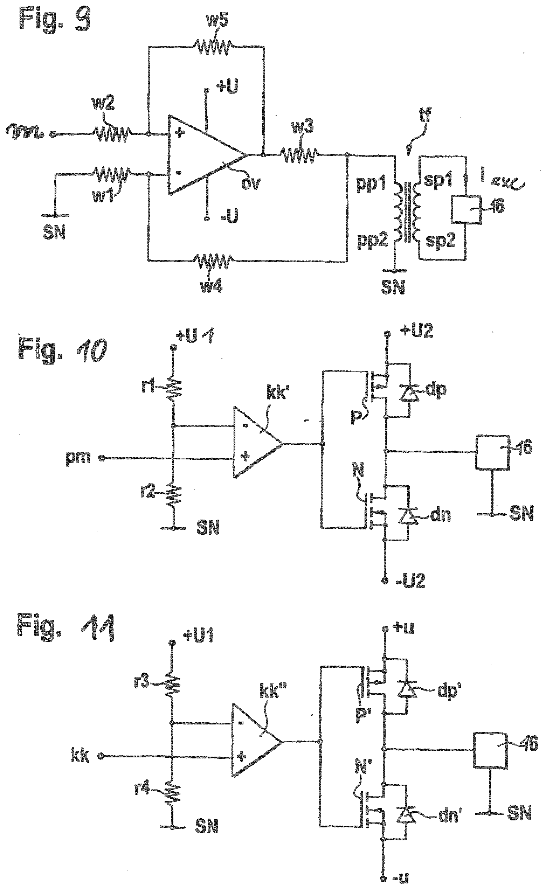

In Fig. 9 ist ein Schaltbild eines bevorzugten ersten Ausführungsbeispiels einer Endstufe ps dargestellt, die beispielsweise in der Amplitudenmodulationsstufe am gemäß Fig. 6 eingesetzt werden kann. Ein Operationsverstärker ov ist an einer positiven und an einer negativen, jeweils konstanten Gleichspannung +U, -U betrieben und wie folgt beschaltet. Ein invertierender Eingang liegt über einen ersten Widerstand w1 am Schaltungsnullpunkt SN und ein nicht-invertierender Eingang über einen zweiten Widerstand w2 am Ausgang des Multiplizierers m.

Ein Ausgang des Operationsverstärkers ov ist unter Zwischenschaltung eines dritten Widerstands w3 mit einem ersten Pol pp1 einer Primärwicklung eines Transformators tf verbunden; ein zweiter Pol pp2 der Primärwicklung liegt am Schaltungsnullpunkt SN. Der Transformator tf hat auch eine Sekundärwicklung, die mittels ihrer beiden Pole sp1, sp2 an der Erregeranordnung 16 angeschlossen ist.

Die Primärwicklung hat eine Primärwindungszahl N1 und die Sekundärwicklung eine Sekundärwindungszahl N2. Der Transformator tf ist ein Strom-Aufwärts-Transformator und hat ein Übersetzungsverhältnis N1/N2 von z.B. 20:1.

Der invertierende Eingang des Operationsverstärkers ov ist über einen vierten Widerstand w4 am ersten Pol pp1 der Primärwicklung angeschlossen. Der nicht-invertierende Eingang ist über einen fünften Widerstand w5 mit dem Ausgang verbunden.

Die fünf Widerstände w1, w2, w3, w4, w5 haben entsprechende Widerstandswerte R1, R2, R3, R4, R5. Der Widerstandswert R1 ist gleich dem Widerstandswert R2 und der Widerstandswert R4 ist gleich dem Widerstandswert R5 zu wählen. Der in der Erregeranordnung 6 fließende Wechselstrom i ergibt sich wie folgt, wenn die Ausgangsspannung des Multiplizierers m mit um bezeichnet ist:

$$i = u_m \cdot \frac{R5}{R1 \cdot R3} \cdot \frac{N1}{N2}$$

In Fig. 10 ist ein Schaltbild eines bevorzugten zweiten Ausführungsbeispiels einer Endstufe ps' dargestellt, die beispielsweise in der Pulsweitenmodulationsstufe pwm gemäß Fig. 7 eingesetzt werden kann. Der "Kern" dieser Ausgestaltung der Endstufe, die eine komplementäre Gegentakt-Endstufe ist, ist eine Serienschaltung des gesteuerten Strompfads eines P-Kanal-Enhancement-Isolierschicht-Feldeffekt-Transistors P mit einem N-Kanal-Enhancement-Isollerschicht-Feldeffekt-Transistor N, die im Folgenden kurz als Transistoren bezeichnet sind.

Am Verbindungspunkt der gesteuerten Strompfade ist die Erregeranordnung 16 angeschlossen. Jedem gesteuerten Strompfad ist eine Schutzdiode dn, dp parallelgeschaltet, wobei die jeweilige Katode am positiveren Punkt des jeweiligen Transistors liegt.

Das P-transistor-seitige Ende der Serienschaltung liegt an einer konstanten positiven zweiten Gleichspannung +U2 und deren N-transistor-seitiges Ende an einer entsprechenden negativen Gleichspannung -U2. Die Gates der Transistoren N, P sind miteinander und mit einem Ausgang eines Komparators kk' verbunden. Der nicht-invertierende Eingang des Komparators kk' liegt am Ausgang des Pulsdauermodulators pm, vgl. Fig. 7.

Der invertierende Eingang des Komparators kk' ist mit einem Abgriff eines Spannungsteilers verbunden, der aus einem Widerstand r1 und einem Widerstand r2 besteht. Die Widerstände r1, r2 haben die gleichen Widerstandswerte und liegen zwischen der positiven Gleichspannung +U1 und dem Schaltungsnullpunkt SN. Die Widerstände r1, r2 und der Komparator kk' dienen der Symmetrierung des Ausgangssignals des Pulsdauermodulators pm bezüglich des halben Wertes der Gleichspannung +U1.

Die Erregeranordnung 16 erhält somit bei jedem positiv gerichteten Nulldurchgang des Ausgangssignals des Sensors 17 bzw. der Summe der Ausgangssignale der Sensoren 17, 18 einen positiven Stromimpuls und bei jedem negativ gerichteten Nulldurchgang des Ausgangssignals des Sensors 17 bzw. der Summe der Ausgangssignale der Sensoren 17, 18 einen negativen Stromimpuls zugeführt. Die jeweilige Dauer dieser Stromimpulse stellt sich automatisch so ein, dass die durch das Referenzsignal Sr vorgegebene Schwingungsamplitude des Meßrohrs 13 erreicht wird.

In Fig. 11 ist ein Schaltbild eines bevorzugten dritten Ausführungsbeispiels einer Endstufe ps" dargestellt, die beispielsweise in der Amplitudenmodulationsstufe am gemäß Fig. 8 eingesetzt werden kann. Der "Kern" diese Ausgestaltung der Endstufe, die wieder eine komplementäre Gegentakt-Endstufe ist, ist auch hier wie in Fig. 10 eine Serienschaltung des gesteuerten Strompfads eines P-Kanal-Enhancement-Isolierschicht-Feldeffekt-Transistors P' mit einem N-Kanal-Enhancement-Isolierschicht-Feldeffekt-Transistor N', die im Folgenden wieder kurz als Transistoren bezeichnet sind.

Am Verbindungspunkt der gesteuerten Strompfade ist die Erregeranordnung 6 angeschlossen. Jedem gesteuerten Strompfad ist eine Schutzdiode dn', dp' parallelgeschaltet, wobei die jeweilige Katode am positiveren Punkt des jeweiligen Transistors liegt.

Das P-transistor-seitige Ende der Serienschaltung liegt an der vom Ausgangssignal der Vergleichsstufe sa abhängigen positiven Gleichspannung +u und deren N-transistor-seitiges Ende an der vom Ausgangssignal der Vergleichsstufe sa abhängigen negativen Gleichspannung -u. Die Gates der Transistoren N', P' sind miteinander und mit einem Ausgang eines Komparators kk" verbunden. Der nicht-invertierende Eingang des Komparators kk" liegt am Ausgang des Komparators kk, vgl. Fig. 8.

Der invertierende Eingang des Komparators kk" ist mit einem Abgriff eines Spannungsteilers verbunden, der aus einem Widerstand r3 und einem Widerstand r4 besteht. Die Widerstände r3, r4 haben die gleichen Widerstandswerte und liegen zwischen der konstanten positiven ersten Gleichspannung +U1 und dem Schaltungsnullpunkt SN. Die Widerstände r3, r4 und der Komparator kk" dienen der Symmetrierung des Ausgangssignals des Komparators kk bezüglich des halben Wertes der Gleichspannung +U1.

Die Erregeranordnung 16 erhält somit während jeder positiven Halbwelle des Ausgangssignals des Sensors 17 bzw. der Summe der Ausgangssignale der Sensoren 17, 18 einen positiven Stromimpuls und während jeder negativen Halbwelle des Ausgangssignals des Sensors 17 bzw. der Summe der Ausgangssignale der Sensoren 17, 18 einen negativen Stromimpuls zugeführt. Die jeweilige Amplitude dieser Stromimpulse ist von den vom Ausgangssignal der Vergleichsstufe sa abhängigen Gleichspannungen +u, -u ihrerseits abhängig, sodass sich die durch das Referenzsignal Sr vorgegebene Schwingungsamplitude des Meßrohrs 13 automatisch einstellt.

Die erwähnten Gleichspannungen +U1, +U2, -U2 werden auf der Basis der von der Zwei-Leiter-Prozesskontroll-Schleife zur Verfügung gestellten Energie in üblicher Weise erzeugt. Es ist auch möglich, anstatt der beiden positiven Gleichspannungen +U1, +U2 nur eine einzige positive Gleichspannung vorzusehen.

Die erwähnte Zweidraht-Prozesskontroll-Schleife führt bei der Erfindung einerseits bevorzugt einen der Energieversorgung dienenden Gleichstrom, wobei insb. das Messsignal ebenfalls ein Gleichstrom ist, der z.B. standard-gemäß einen Bereich von 4 mA bis 20 mA umfasst. Andererseits kann das Messsignal auch bevorzugt ein Digitalsignal sein, sodass die Zweidraht-Prozesskontroll-Schleife an einen Feldbus angeschlossen werden kann.

Die Erregerschaltung der Erfindung stellt zusammen mit dem Meßrohr 13 einen Regelkreis dar, der sich elektrisch sowohl auf die mechanische Resonanzfrequenz der erregten Vibrationen des Meßrohrs 13 als auch auf die mittels des Referenzsignals Sr vorgegebene Amplitude dieser Vibrationen einstellt

Es sind daher die bisher üblichen Erregerschaltungen, die eine Amplitudenregelstufe und eine phasenverriegelte Schleife, eine sogenannte PLL, zur elektrischen Regelung der Resonanzfrequenz und der Vibrationsamplitude aufweisen, nicht erforderlich. Die bisherigen Erregerschaltungen sind nicht nur, was die Anzahl der erforderlichen Komponenten betrifft, sehr aufwendig, sondern sie benötigen auch weit mehr Versorgungsenergie, als bei Zwei-Draht-Meßgeräten zur Verfügung steht.

Die Erregerschaltung 160 der Erfindung benötigt nur wenige Komponenten, die somit insgesamt auch nur eine praktisch vernachlässigbare Verlustleistung aufweisen, so dass die zur Verfügung stehende geringe Versorgungsenergie fast vollständig für die Erregung nutzbar ist

**Patentansprüche**

1. Viskositäts-Messgerät für ein in einer Rohrleitung strömendes Fluid, welches Viskositäts-Messgerät umfasst:

   - einen Messaufnehmer (10) vom Vibrationstyp, insb. vom Biegeschwingungstyp,
   - mit mindestens einem mit der Rohrleitung kommunizierenden, im Betrieb vibrierenden Messrohr (13) zum Führen des Fluids und zum Erzeugen von im Fluid wirkenden Reibungskräften,

- mit einer Erregeranordnung (16) zum Vibrierenlassen des mindestens einen Messrohrs (13) sowie

- eine einen vorgebbaren Bedarf an elektrischer Leistung aufweisende Messgerät-Elektronik (50), die

- einen die Erregeranordnung (16) speisenden Erregerstrom ($i_{exc}$) und

- einen eine Viskosität des Fluids momentan repräsentierenden Viskositäts-Messwert ($X_\eta$) liefert,

- wobei die Messgerät-Elektronik (50) mit einer Zwei-Leiter-Prozesskontroll-Schleife verbunden und davon mit elektrischer Energie versorgt ist,

- wobei die Messgerät-Elektronik (50) ein mit dem Viskositäts-Messwert ($X_\eta$) korrespondierendes Viskositätssignal in die Zwei-Leiter-Prozesskontroll-Schleife (2L) einspeist oder dieses einstellt,

- bei dem der Bedarf der Messgerät-Elektronik (50) an elektrischer Leistung variierbar ist und

- bei dem die Messgerät-Elektronik (50) eine Steuerschaltung (84) zum Einstellen des Bedarfs an elektrischer Leistung umfasst, und

- bei dem die Messgerät-Elektronik (50) wenigstens einen an die Zwei-Leiter-Prozesskontroll-Schleife (2L) gekoppelten Energiepuffer (82, 83) enthält, der die von der Messgerät-Elektronik (50) benötigte Leistung zumindest teilweise und/oder zumindest zeitweise bereitstellt.

2. Viskositäts-Messgerät nach Anspruch 1, bei dem die Messgerät-Elektronik umfasst:

- eine Erregerschaltung (160) zum Erzeugen des Erregerstroms und

- eine Auswerteschaltung (90) zum Erfassen des Sensorsignals (17, 18) und Ermitteln des Viskositäts-Messwerts ($X_\eta$), wobei

- die Steuerschaltung (84) die Erregerschaltung (160) und/oder die Auswerteschaltung (90) zum Absenken des Bedarfs an elektrischer Leistung zeitweise deaktiviert.

3. Viskositäts-Messgerät nach Anspruch 1 oder 2, bei dem die Steuerschaltung (84) ein zeitweises Laden des Energiepuffers (82, 83) veranlasst.

4. Viskositäts-Messgerät nach einem der Ansprüche 1 bis 3, das mittels der Zweidraht-Prozesskontroll-Schleife (2L) an einem Feldbus angeschlossen ist.

5. Viskositäts-Messgerät nach einem der Ansprüche 1 bis 4, bei dem als Viskositätssignal ein in der Zweidraht-Prozesskontroll-Schleife (2L) fließender, insb. innerhalb eines Bereichs von 4 mA bis 20 mA veränderlicher, Gleichstrom oder ein Digitalsignal ist.

6. Viskositäts-Messgerät nach einem der Ansprüche 1 bis 5, bei dem der Messaufnehmer eine Sensoranordnung (60) zum Erfassen von Vibrationen des Messrohrs (13) und zum Erzeugen von mindestens einem diese repräsentierenden Sensorsignal (s1) aufweist.

7. Viskositäts-Messgerät nach Anspruch 6, bei dem die Messgerät-Elektronik (50) den Erregerstrom ($i_{exc}$) mittels des mindestens einen Sensorsignals (s1) einstellt.

8. Viskositäts-Messgerät nach Anspruch 6 oder 7, bei dem die Erregerschaltung (160) eine Amplitudendemodulationsstufe (pd) zum Erzeugen eines Ausgangssignal umfaßt, das eine Schwingungsamplitude des vibrierenden Meßrohrs (13) momentan repräsentiert, wobei der Amplitudendemodulationsstufe (pd) eines der von der Sensoranordnung (60) gelieferten Sensorsignale (s1, s2) bzw. deren Summe als Eingangssignal zugeführt ist,

9. Viskositäts-Messgerät nach Anspruch 8, bei dem die Erregerschaltung (160) eine Vergleichsstufe (sa) zum Ermitteln einer Abweichung der erfaßten Schwingungsamplitude des vibrierenden Meßrohrs (13) von einer vorgegebenen Soll-Schwingungsamplitude umfaßt., wobei der Vergleichsstufe (sa) eingangseits neben dem Ausgangssignal der Amplitudendemodulationsstufe (pd) ein Referenzsignal (Sr) zugeführt ist, das die Soll-Schwingungsamplitude repräsentiert.

10. Viskositäts-Messgerät nach Anspruch 9, bei dem die Erregerschaltung (160) eine eingangsseits mit einem Ausgang der Vergleichsstufe (sa) gekoppelte Amplitudenmodulationsstufe (am) zum Erzeugen eines Treibersignals für die Erregeranordnung (16) umfaßt, das eine von der ermittelten Abweichung abhängige Signalamplitude aufweist, wobei der Amplitudenmodulationsstufe (am) eingangsseits neben einem die Abweichung der erfaßten Schwingungsamplitude von der vorgegebenen Soll-Schwingungsamplitude repräsentierenden Fehlersignal das Eingangssignal der Amplitudendemodulationsstufe (pd) zugeführt ist.

11. Viskositäts-Messgerät nach Anspruch 9, bei dem die Erregerschaltung (160) eine eingangsseits mit einem Ausgang der Vergleichsstufe (sa) gekoppelte Pulsweitenmodulationsstufe (pwm) zum Erzeugen eines getakteten Treibersignals für die Erregeranordnung (16), das eine von der ermittelten Abweichung abhängige Pulsweite aufweist, wobei der Pulsweitenmodulationsstufe (pwm) eingangsseits neben einem die Abweichung der erfaßten Schwingungsamplitude von der vorgegebenen Soll-Schwingungsamplitude repräsentierenden Fehlersignal das Eingangssignal der Amplitudendemodulationsstufe (pd) zugeführt ist.

## Claims

1. Viscosity measuring device for a fluid flowing through a pipe, said viscosity measuring device comprising:

    - a vibronic-type sensor (10), particularly a flexural vibration type of sensor,
    - with at least one measuring tube (13) that communicates with the pipe and vibrates during operation, said measuring tube being designed to conduct the fluid and generate friction forces acting in the fluid
    - with an exciter arrangement (16) to make the at least one measuring tube (13) vibrate
    - a measuring electronics module (50) which has a predefined electrical power requirement, which
    - supplies excitation current ($i_{exc}$) which powers the exciter arrangement (16) and
    - supplies a viscosity measured value ($X_\eta$) that currently represents a viscosity of the fluid
    - wherein the measuring electronics module (50) is connected to a two-wire process control loop and is supplied with electrical energy by said loop
    - wherein the measuring electronics module (50) feeds a viscosity signal, which corresponds to the viscosity measured value ($X_\eta$), into the two-wire process control loop (2L), or sets this signal
    - wherein the need of the measuring electronics module (50) for electrical power is variable and
    - wherein the measuring electronics module (50) comprises a control circuit (84) to set the need for electrical power, and
    - wherein the measuring electronics module (50) contains at least an energy buffer (82, 83) that is coupled to the two-wire process control loop (2L) which at least partially and/or at least temporarily provides the power that is required by the measuring electronics module (50).

2. Viscosity measuring device as claimed in Claim 1, wherein the measuring electronics module comprises:

    - a exciter circuit (160) to generate the excitation current and
    - an evaluation circuit (90) to record the sensor signal (17, 18) and to determine the viscosity measured value ($X_\eta$), wherein
    - the control circuit (84) temporarily deactivates the exciter circuit (160) and/or the evaluation circuit (90) to reduce the electrical power required.

3. Viscosity measuring device as claimed in Claim 1 or 2, wherein the control circuit (84) initiates a temporary charging of the energy buffer (82, 83).

4. Viscosity measuring device as claimed in one of the Claims 1 to 3 which is connected to a fieldbus by means of the two-wire process control loop (2L).

5. Viscosity measuring device as claimed in one of the Claims 1 to 4, wherein a direct current, which flows in the two-wire process control loop (2L), and particularly can vary within a range of 4 mA to 20 mA, or a digital signal serves as the viscosity signal.

6. Viscosity measuring device as claimed in one of the Claims 1 to 5, wherein the sensor has a sensor arrangement (60) for measuring vibrations of the measuring tube (13) and for generating at least one sensor signal (s1) that represents these vibrations.

7. Viscosity measuring device as claimed in Claim 6 wherein the measuring electronics module (50) sets the excitation current ($i_{exc}$) using the at least one sensor signal (s1).

8. Viscosity measuring device as claimed in Claim 6 or 7, wherein the exciter circuit (160) comprises an amplitude demodulation stage (pd) for generating an output signal that currently represents a vibration amplitude of the vibrating measuring tube (13), wherein one of the sensor signals (s1, s2) supplied by the sensor arrangement (60) or the sum of the signals is supplied to the amplitude demodulation stage (pd) as the input signal.

9. Viscosity measuring device as claimed in Claim 8, wherein the exciter circuit (160) has a comparison stage (sa) for determining a deviation between the recorded vibration amplitude of the vibrating measuring tube (13) and a predefined target vibration amplitude, wherein in addition to the output signal of the amplitude demodulation stage (pd) a reference signal (Sr) is supplied to the comparison stage (sa) at the input side, said reference signal representing the target vibration amplitude.

10. Viscosity measuring device as claimed in Claim 9, wherein the exciter circuit (160) comprises an amplitude modulation stage (am) that is coupled to an output of the comparison stage (sa) for the purpose of generating a driver signal for the exciter arrangement (16), which has a signal amplitude that depends on the deviation determined, wherein in addition to an error signal that represents the deviation of the recorded vibration amplitude from the predefined target vibration amplitude, the input signal of the amplitude demodulation stage (pd) is supplied to the amplitude modulation stage (am) at the input side.

11. Viscosity measuring device as claimed in Claim 9, wherein the exciter circuit (160) has a pulse width modulation stage (pwm), which is coupled with an output of the comparison stage (sa) on the input side, for the purpose of generating a clocked driver signal for the exciter arrangement (16) which has a pulse width that depends on the deviation determined, wherein in addition to an error signal that represents the deviation of the recorded vibration amplitude from the predefined target vibration amplitude, the input signal of the amplitude demodulation stage (pd) is supplied to the pulse width modulation stage (pwm) at the input side.

**Revendications**

1. Viscosimètre pour un fluide s'écoulant dans une conduite, lequel viscosimètre comprend :

    - un capteur (10) du type à vibrations, notamment du type à vibrations de flexion
    - avec au moins un tube de mesure (13) vibrant en fonctionnement et communiquant avec la conduite, lequel tube est destiné à guider le fluide et à générer des forces de frottement agissant dans le fluide,
    - avec un agencement d'excitation (16) destiné à faire entrer l'au moins un tube de mesure (13) en vibrations, ainsi que
    - une électronique d'appareil de mesure (50) présentant un besoin prédéfinissable en puissance électrique, qui délivre
    - un courant d'excitation ($i_{exc}$) alimentant l'agencement d'excitation (16) et
    - une valeur mesurée de viscosité ($X_\eta$) représentant momentanément une viscosité du fluide,
    - l'électronique d'appareil de mesure (50) étant reliée avec une boucle de contrôle de process à 2 fils et alimentée par celle-ci en énergie électrique,
    - l'électronique d'appareil de mesure (50) injectant dans la boucle de contrôle de process à 2 fils ou réglant un signal de viscosité correspondant à la valeur mesurée de viscosité ($X_\eta$),
    - le besoin de l'électronique d'appareil de mesure (50) en puissance électrique pouvant être varié et
    - l'électronique d'appareil de mesure (50) comprenant un circuit de commande (84) destiné au réglage du besoin en puissance électrique, et
    - l'électronique d'appareil de mesure (50) contenant au moins un tampon d'énergie (82, 83) couplé à la boucle de contrôle de process à 2 fils, lequel tampon met à disposition au moins partiellement et/ou au moins temporairement la puissance requise par l'électronique d'appareil de mesure (50).

2. Viscosimètre selon la revendication 1, pour lequel l'électronique d'appareil de mesure comprend :

    - un circuit d'excitation (160) destiné à générer le courant d'excitation et
    - un circuit d'exploitation (90) destiné à mesurer le signal du capteur (17, 18) et à déterminer la valeur mesurée de viscosité ($X_\eta$), cependant
    - le circuit de commande (84) désactivant temporairement le circuit d'excitation (160) et/ou le circuit d'exploitation (90) pour la réduction du besoin en puissance électrique.

3. Viscosimètre selon la revendication 1 ou 2, pour lequel le circuit de commande (84) déclenche une charge temporaire du tampon d'énergie (82, 83).

4. Viscosimètre selon l'une des revendications 1 à 3, lequel est raccordé à un bus de terrain au moyen de la boucle de contrôle de process à 2 fils.

5. Viscosimètre selon l'une des revendications 1 à 4, pour lequel un courant continu, notamment variable dans la gamme de 4 mA à 20 mA, circulant dans la boucle de contrôle de process à 2 fils (2L), ou un signal numérique est utilisé en tant que signal de viscosité.

6. Viscosimètre selon l'une des revendications 1 à 5, pour lequel le capteur comporte un agencement de capteurs (60) pour la mesure des vibrations du tube de mesure (13) et pour la génération d'au moins un signal de capteur (s1) représentant celles-ci.

7. Viscosimètre selon la revendication 6, pour lequel l'électronique d'appareil de mesure (50) règle le courant d'excitation ($i_{exc}$) au moyen de l'au moins un signal de capteur (s1).

8. Viscosimètre selon la revendication 6 ou 7, pour lequel le circuit d'excitation (160) comprend un étage de démodulation d'amplitude (pd) destiné à la génération d'un signal de sortie, lequel étage représente momentanément une amplitude de vibration du tube de mesure (13) vibrant, l'un des signaux de capteur (s1, s2), délivré par l'agencement de capteurs (60), ou leur somme étant acheminé en tant que signal d'entrée à l'étage de démodulation d'amplitude (pd).

9. Viscosimètre selon la revendication 8, pour lequel le circuit d'excitation (160) comprend un étage de comparaison (sa) destiné à la détermination d'un écart de l'amplitude de vibration mesurée du tube de mesure (13) vibrant par rapport à une amplitude de vibration de consigne prédéfinie, un signal de référence (Sr) étant acheminé à l'étage de comparaison (sa) côté entrée, en plus du signal de sortie de l'étage de démodulation d'amplitude (pd), lequel signal représente l'amplitude de vibration de consigne.

10. Viscosimètre selon la revendication 9, pour lequel le circuit d'excitation (160) comprend un étage de modulation d'amplitude (am) couplé côté entrée avec une sortie de l'étage de comparaison (sa), lequel étage est destiné à la génération d'un signal d'attaque pour l'agencement d'excitation (16), lequel signal présente une amplitude dépendant de l'écart déterminé, le signal d'entrée de l'étage de démodulation d'amplitude (pd) étant acheminé à l'étage de modulation d'amplitude (am) côté entrée, en plus du signal d'erreur représentant l'écart de l'amplitude de vibration mesurée par rapport à l'amplitude de vibration de consigne prédéfinie.

11. Viscosimètre selon la revendication 9, pour lequel le circuit d'excitation (160) comprend un étage de modulation de largeur d'impulsion (pwm) couplé côté entrée avec une sortie de l'étage de comparaison (sa), lequel étage est destiné à la génération d'un signal d'attaque cadencé pour l'agencement d'excitation (16), lequel signal présente une largeur d'impulsion dépendant de l'écart déterminé, le signal d'entrée de l'étage de démodulation d'amplitude (pd) étant acheminé à l'étage de modulation de largeur d'impulsion (pwm) côté entrée, en plus du signal d'erreur représentant l'écart de l'amplitude de vibration mesurée par rapport à l'amplitude de vibration de consigne prédéfinie.

Fig. 1

fig. 2

Fig. 3

Fig.4

FIG. 5

Fig. 6

Fig. 7

EP 1 397 663 B2

Fig. 8

EP 1 397 663 B2

23

Fig. 9

Fig. 10

Fig. 11

24

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4524610 A
- US 4704898 A
- US 4754640 A
- US 4920787 A
- US 4922745 A
- US 5157962 A
- US 5228331 A
- US 5448921 A
- WO A9516897 A
- EP 527176 A
- EP 1158289 A

- EP 01120343 A
- EP 01121869 A
- WO 9516897 A
- US 6006609 A
- US 4801897 A
- US 5648616 A
- US 5796011 A
- US 5301557 A
- US 5357811 A
- US 5557973 A
- US 5602345 A